Europäisches Patentamt

European Patent Office

Office européen des brevets

(19)

(11) Veröffentlichungsnummer : **0 500 986 B1**

## (12) EUROPÄISCHE PATENTSCHRIFT

(45) Veröffentlichungstag der Patentschrift :
**13.09.95 Patentblatt 95/37**

(51) Int. Cl.$^6$ : **G05D 7/06**, G05D 16/20

(21) Anmeldenummer : **91102931.2**

(22) Anmeldetag : **27.02.91**

---

(54) **Korrekturschaltung für 4-Wege-Durchflussstetigventil.**

---

(43) Veröffentlichungstag der Anmeldung :
**02.09.92 Patentblatt 92/36**

(45) Bekanntmachung des Hinweises auf die
Patenterteilung :
**13.09.95 Patentblatt 95/37**

(84) Benannte Vertragsstaaten :
**DE GB IT**

(56) Entgegenhaltungen :
**EP-A- 0 357 964**
**DE-A- 3 823 283**

(73) Patentinhaber : **MOOG GmbH**
**Hanns-Klemm-Strasse 28**
**D-71034 Böblingen (DE)**

(72) Erfinder : **Behrens, Klaus**
**Zeisigweg 2**
**W-7043 Grafenau 1 (DE)**
Erfinder : **Kollmar, Friedrich**
**Krähenweg 15**
**W-7043 Grafenau 1 (DE)**

(74) Vertreter : **Grünecker, Kinkeldey, Stockmair &**
**Schwanhäusser Anwaltssozietät**
**Maximilianstrasse 58**
**D-80538 München (DE)**

---

## Beschreibung

Die Erfindung bezieht sich auf ein 4-Wege-Durchflußstetigventil nach dem Oberbegriff des Anspruches 1.

Aus dem Stand der Technik sind Proportional-Stetig (P/Q)-Ventile in 3-Wege-Ausführung bekannt. Diese Ventile regeln einen Druck oder eine Ventildurchflußmenge in einem Verbraucher (Last) in Abhängigkeit von einem vom Anwender vorgegebenen analogen Sollsignal. Der Ventildurchfluß ist durch die Stellung eines Steuerkolbens bestimmt, die mit Hilfe eines elektronischen Lageregelkreises geregelt ist. Hierzu vergleicht der im Ventil integrierte Lageregler den durch den Lageaufnehmer erfaßten Istwert der Steuerschieberstellung mit einem Sollwertsignal. Bei Soll-Istwert-Abweichungen gibt der integrierte Lageregler Stellsignale an die Vorsteuerstufe ab, die dem Lagefehler des Steuerschiebers entgegenwirken. Weiter enthält das Durchflußventil einen Druckaufnehmer und einen Druckbegrenzungsregler. Dieser Druckbegrenzungsregler vergleicht den Druck zum Ausfahren des Zylinders im Druckauslaßkanal mit einem externen Druckgrenzwert. Überschreitet das Ausgangssignal des Druckaufnehmers den Druckgrenzwert, so gibt der Druckbegrenzungsregler ein Korrektursignal zur Verringerung des Sollwertsignals ab. Mit dieser Anordnung kann die Geschwindigkeit des Zylinders gesteuert werden, wobei der Druckbegrenzungsregler dafür sorgt, daß der Druck im Druckauslaßkanal einen bestimmten Wert (Druckgrenze) nicht überschreitet, und somit die Kraft des Zylinders begrenzt wird. Nachteilig bei dieser Ausführung ist jedoch, daß beim Einfahren des Zylinders die Kraft nicht begrenzt wird.

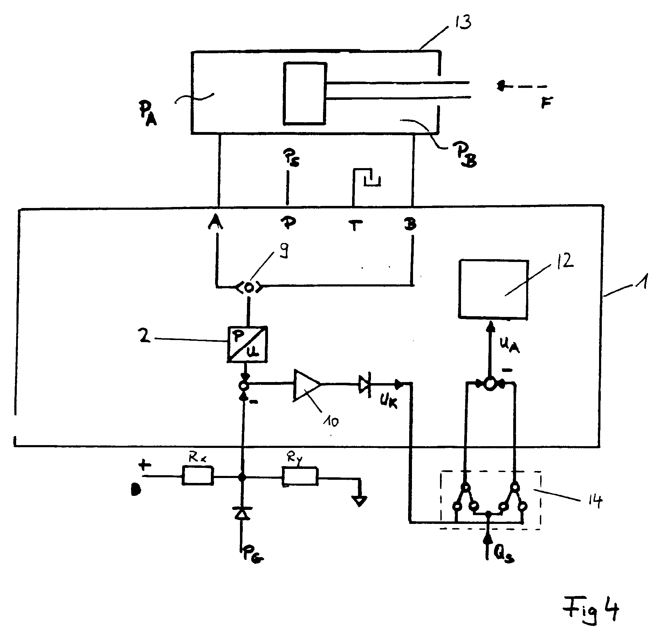

Weiter sind aus dem Stand der Technik P/Q-Ventile gemäß der Figur 4 als 4-Wege-Ventile mit zwei Anschlüssen A und B zum Ein- und Ausfahren des Zylinders bekannt. Über ein Wechselventil ist der Druckaufnehmer mit den Anschlüssen A und B des Ventiles verbunden. Der Druckaufnehmer mißt immer den höheren Druck der beiden Drücke $P_A$ bzw. $P_B$ in den Kammern, die mit den entsprechenden Anschlüssen verbunden sind.

Der Druckbegrenzungsregler 10 ist eingangsseitig über eine Diode mit der Eingangsklemme $P_G$ für den Druckgrenzwert verbunden. Zusätzlich weist der Eingang des Druckbegrenzungsreglers 10 eine Verbindung zu einer Spannungsteilerschaltung auf, bestehend aus zwei Widerständen $R_X$ und $R_Y$, wobei der Widerstand $R_X$ mit der positiven Versorgungsspannung, der Widerstand $R_Y$ mit dem Bezugspotential und der mittige Anschluß mit dem Druckbegrenzungsregler verbunden ist. Der Ausgang $U_K$ des Druckbegrenzungsreglers 10 ist im Vorwärtszweig über eine in Flußrichtung gepolte Diode mit dem Eingang eines zweipoligen Relais 14 verbunden. Der andere Eingang des Relais 14 ist mit der Eingangsklemme $Q_S$ für das Durchfluß-Sollsignal verbunden. Die beiden Ausgänge des Relais 14 liefern mit der Subtrahiereinrichtung das Signal $U_A$, das eingangsseitig in den Lageregler 12 geführt ist.

Der Zylinder (13) fährt durch ein Signal $U_A$ positiver Polarität aus und durch ein Signal $U_A$ negativer Polarität wieder ein. Zur Erzeugung eines positiven Signals $U_A$ subtrahiert der Differenzverstärker das Korrektursignal $U_K$ vom Q-Soll-Signal. Zur Erzeugung des negativen Signales $U_A$ werden die beiden Eingänge Q-Soll und Korrektursignal $U_K$ des subtrahierenden Differenzverstärkers miteinander vertauscht. Dies geschieht durch Betätigung des zweipoligen Umschaltrelais 14 bei einem beabsichtigten Wechsel der Bewegungsrichtung des Zylinders (13). Nachteilig bei dieser Ausführung ist jedoch die zusätzlich erforderliche Steuerleitung zum Umschalten des Relais 14. Weiter ist es notwendig, den Druckgrenzwert über ein externes elektrisches Netzwerk auf einen unteren Mindestwert zu begrenzen. Ohne die Begrenzung kann das Korrektursignal $U_K$ einen größeren Wert als das Q-Soll-Signal annehmen. Dadurch wechselt das Signal $U_A$ unzulässigerweise seine Polarität, was zu einer Fehlfunktion des Steuerkolbens 7 führt.

Der Erfindung liegt die Aufgabe zugrunde, ein 4-Wege-Durchflußstetigventil der eingangs genannten Art anzugeben, das einfach aufgebaut ist.

Diese Aufgabe wird, gemäß vorliegender Erfindung durch die Merkmale des Anspruches 1 gelöst.

Die beiden Schaltstrecken sind derart ausgebildet, daß sie an ihrem Ausgang kein Signal liefern, wenn das Korrektursignal $U_K$ größer ist als der Betrag des Sollwerts $Q_S$. Weiterhin ist stets nur eine der beiden Schaltstrecken bei einer bestimmten Polarität aktiv, während die andere kein Ausgangssignal erzeugt. Dadurch stimmt die Polarität des Ausgangssignals des elektrischen Schaltkreises immer mit der Polarität des Eingangssollsignals überein und der Betrag des Ausgangssignals ist maximal auf den Wert Null verringert. Dem Anwender steht ein voll abgeglichenes kalibriertes Durchflußregelventil zur Verfügung, das Eingangssollwerte positiver und negativer Polarität in eine Steuerbewegung für den Steuerkolben umsetzt. Eine Fehlfunktion des Steuerkolbens durch einen unzulässigen Polaritätswechsel ist dabei ausgeschlossen. Die im Stand der Technik benötigten Schaltmittel und externen Beschaltungen sind nicht erforderlich.

Gemäß einer bevorzugten Ausführungsform beinhalten die elektrischen Schaltstrecken zum Erzeugen des Ausgangssignals wenigstens einen mit negativer Rückkopplung versehenen Operationsverstärker. Die Operationsverstärker realisieren in Analogtechnik die Addition der Eingangssignale bzw. die Subtraktion durch eine Addition eines invertierten Signals mit einem nichtinvertierten Signal.

EP 0 500 986 B1

Gemäß einer Weiterbildung weisen die Operationsverstärker der beiden Schaltstrecken im Rückkopplungszweig eine Diode auf, die derart gepolt ist, daß die gesamte Teilstrecke nur für eine Polarität aktiv ist. Für die eine Polarität ist der Ausgang des Operationsverstärkers mit dem Eingang kurzgeschlossen, so daß die Schaltstrecke kein Ausgangssignal für diese Polarität liefert. Für die andere Polarität ist der Operationsverstärker in herkömmlicher Weise mit einem verstärkenden Rückkopplungselement versehen.

Günstigerweise enthalten die beiden Schaltstrecken im Vorwärtszweig jeweils eine Diode, die derart gepolt ist, daß die gesamte Schaltstrecke nur für eine Polarität ein Ausgangssignal liefert.

Gemäß einer bevorzugten Ausführungsform weist der Steuerkolben einen speziellen Steuerkantenschnitt mit einer Überdeckung zwischen den Anschlüssen A, B und dem Betriebsdruckanschluß P in einem Bereich von 20-30 %, vorzugsweise 20 % und mit einer Unterdeckung zwischen den Anschlüssen A, B und dem Ausgleichsbehälter T in einem Bereich von 15 bis 25 %, vorzugsweise 15 % auf. Dieser Weiterbildung liegt die Erkenntnis zugrunde, daß der spezielle Steuerkantenschnitt eine Abhängigkeit der Drücke in den Kammern des Arbeitszylinders vom Ansteuersignal des Steuerkolbens bewirkt. Diese Abhängigkeit besteht bei einem symmetrischen Nullschnittventil nicht, vielmehr steht der Kammerdruck des Arbeitszylinders in einem konstanten Verhältnis zum Betriebsdruck. Bei einem Steuerkolben mit Steuerkantenschnitt ist der Druck in den Kammern des Arbeitszylinders bei einem kleinen Ansteuersignal entsprechend geringer. Mit der Schaltung nach der Erfindung ist es möglich, mit einem Druckgrenzwert zu arbeiten, der noch unterhalb dem unteren Grenzwert liegt, der durch die externe Schaltung nach dem Stand der Technik erzeugt wird. Die Arbeitsweise mit einem so geringen Druckgrenzwert wäre jedoch bei der Schaltung nach dem Stand der Technik aus Sicherheitsgründen nicht zulässig.

Gemäß einer bevorzugten Ausführungsform ist der elektrische Schaltkreis in dem Ventilgehäuse integriert. Bei der Korrekturschaltung gemäß der Erfindung werden nur diskrete, einfach auf einer gedruckten Schaltplatte montierbare Bauteile verwendet. Da keine externe Beschaltung und keine Relais verwendet werden, läßt sich die gesamte Elektronik auf einfacheWeise in dem Ventil integrieren.

Im folgenden wird die Erfindung anhand einer in den Zeichnungen dargestellten Ausführungsform erläutert. Es zeigen:

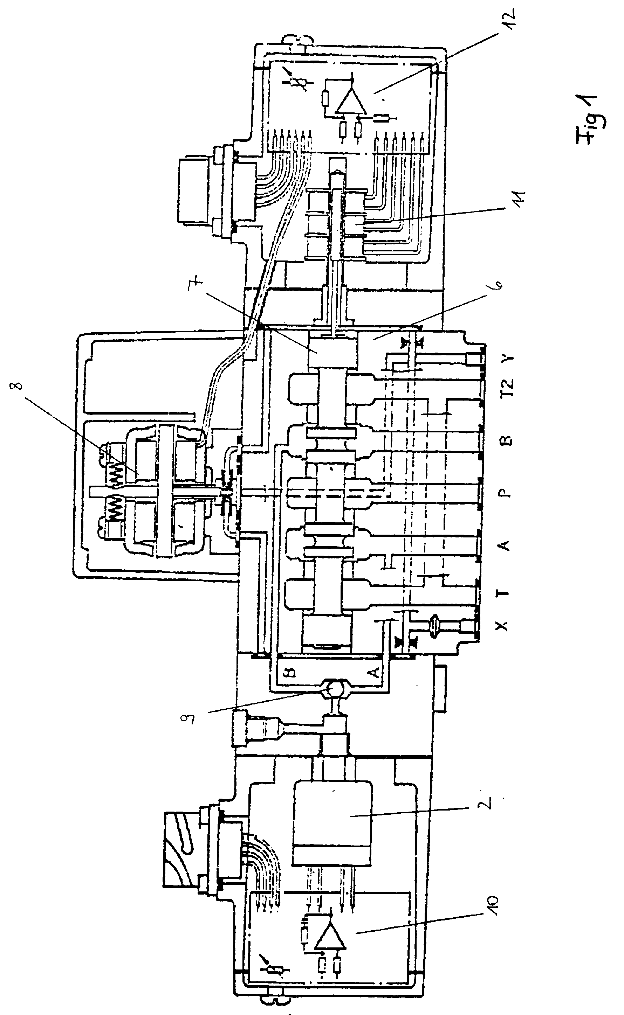

Figur 1        ein Schnittbild durch das 4-Wege-Durchflußstetigventil;
Figur 2        in einer schematischen Darstellung den Signalflußplan des Ventils mit der Korrekturschaltung gemäß der Erfindung;
Figur 3        eine bevorzugte Ausführungsform der Korrekturschaltung;
Figur 4        in einer schematischen Darstellung den Signalflußplan des Ventils mit einer Schaltung gemäß dem Stand der Technik.

Das 4-Wege-Durchflußstetigventil 1 weist ein Ventilgehäuse 6 mit einem mittigen Druckeinlaßkanal P, zwei in axialer Richtung versetzt angeordnete Druckauslaßkanäle A, B und zwei Rückführkanäle T, T2, die mit dem Versorgungstank verbunden sind, auf. In dem Ventilgehäuse 6 ist ein Steuerkolben 7 gelagert, dessen zwei Stirnflächen mit einem Steuerdruck der Vorsteuerstufe 8 in axialer Richtung beaufschlagt werden. Der Steuerkolben 7 ist so ausgebildet, daß die Druckauslaßkanäle A, B gegenüber dem mittigen Druckeinlaßkanal P eine 20%ige Überdeckung aufweisen. Zwischen den Druckauslaßkanälen A, B und den Rückführkanälen T, T2, dagegen besteht eine 15 %ige Unterdeckung. Das Durchfluß-Stetigventil beinhaltet ein Wechselventil 9, das eingangsseitig mit den Kammern, Druckausflußkanäle A, B verbunden ist. Ausgangsseitig ist das Wechselventil 9 mit dem Druckaufnehmer 2 verbunden. Dieses Wandlerelement ist wiederum ausgangsseitig mit dem Druckbegrenzungsregler 10 verbunden. Der Steuerkolben 7 besitzt an einer seiner Stirnflächen eine Verlängerung, die in den induktiven Lageaufnehmer 11 hineinragt. Der induktive Lageaufnehmer speist sein Ausgangssignal in den im Ventil integrierten Lageregler 12 ein.

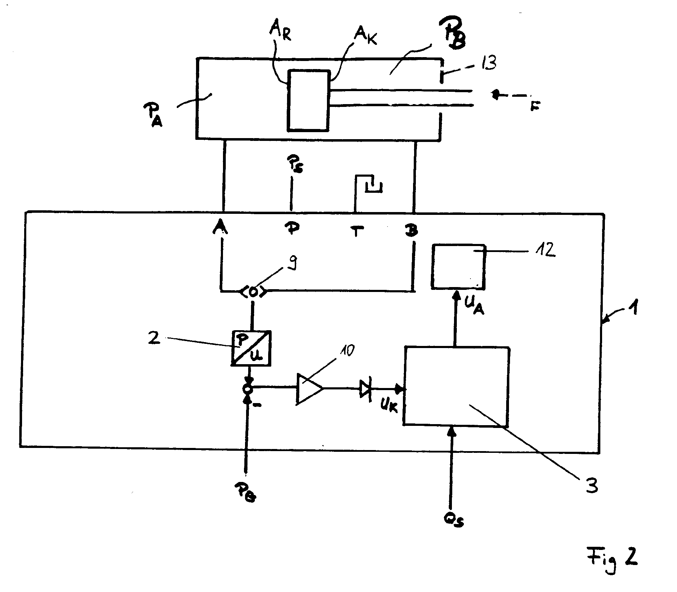

In Figur 2 ist in einer schematischen Darstellung ein Verbraucher, beispielsweise ein Differentialzylinder 13 und das Proportional-Stetigventil 1 dargestellt. Der Differentialzylinder weist einen mit einer Kraft F belastbaren Kolben mit den Querschnittsflächen $A_K$ und $A_R$ auf. Der Kolben teilt den Differentialzylinder 13 in zwei Kammern, die jeweils mit den Druckauslaßkanälen A, B des Vierwege-Proportional-Stetigventils verbunden sind. Der Druck in den beiden Kammern wird über das Wechselventil 9 und dem integrierten Druckaufnehmer 2 in den Druckbegrenzungsregler 10 als elektrisches Signal eingespeist. Weiter erhält der Druckbegrenzungsregler 10 eingangsseitig den Druckgrenzwert $P_G$. Der Schaltkreis 3 gemäß der vorliegenden Erfindung ist eingangsseitig über eine für ein positives Signal in Flußrichtung gepolte Diode mit dem Ausgang des Druckbegrenzungsreglers verbunden und erhält zusätzlich das Durchfluß-Sollsignal $Q_S$. Die Ausgangsseite liefert das Signal $U_A$, das in den Lageregler 12 eingespeist wird.

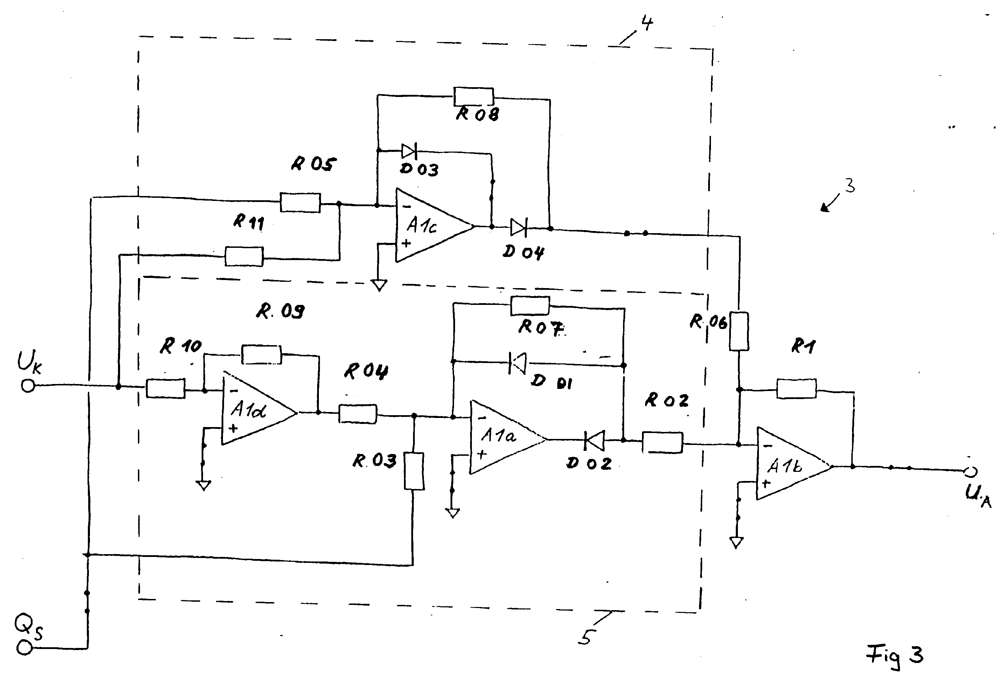

Figur 3 zeigt eine bevorzugte Ausführungsform der Korrekturschaltung gemäß der Erfindung. Die Korrekturschaltung 3 umfaßt zwei Schaltstrecken 4,5, die beide eingangsseitig das Durchfluß-Sollsignal $Q_S$ und das Korrektursignal $U_K$ erhalten. Die Schaltstrecke 4 umfaßt einen Operationsverstärker A1c. Sein invertierender Eingang ist über die Widerstände R5 und R11 mit den beiden Eingangsklemmen der Korrekturschaltung

3

3 verbunden. Der Ausgang des Operationsverstärkers A1c ist über die Diode D3 die in bezug auf eine positive Polarität in Sperrichtung gepolt ist, mit dem invertierenden Eingang verbunden. Der Ausgang ist weiterhin über die Diode D4, die in bezug auf eine positive Polariät in Flußrichtung geschaltet ist und den Widerstand R8 auf den invertierenden Eingang des Operationsverstärkers rückgekoppelt. Der nichtinvertierende Eingang des Operationsverstärkers ist auf ein Bezugspotential gelegt.

Die Schaltstrecke 5 umfaßt zwei Operationsverstärker A1d und A1a in Serienschaltung. Der invertierende Eingang des Operationsverstärkers A1d ist über den Widerstand R10 mit der Eingangsklemme $U_K$ verbunden. Sein Ausgangssignal ist über den Widerstand R9 auf den invertierenden Eingang rückgekoppelt. Der nicht invertierende Eingang ist auf ein Bezugspotential gelegt. Das Ausgangssignal des Operationsverstärkers A1d ist über den Widerstand R4 mit dem invertierenden Eingang des Operationsverstärkers A1a verbunden. Zusätzlich speist die Eingangsklemme $Q_S$ über den Widerstand R3 in den invertierenden Eingang des Operationsverstärkers A1a ein. Der Ausgang des Operationsverstärkers A1a weist in seinem Vorwärtszweig eine Diode D2 auf, die in bezug auf eine negative Polarität in Flußrichtung geschaltet ist. Das Ausgangssignal ist über die Diode D1 und den Widerstand R7 auf den invertierenden Eingang des Operationsverstärkers rückgekoppelt. Der nichtinvertierende Eingang des Operationsverstärkers A1a ist auf ein Bezugspotential gelegt.

Die beiden Ausgänge der Schaltstrecken 4 und 5 sind über die Widerstände R6 und R2 mit dem invertierenden Eingang des Operationsverstärkers A1b verbunden. Der nichtinvertierende Eingang des Operationsverstärkers ist auf ein Bezugspotential gelegt. Der Ausgang des Operationsverstärkers $U_A$ ist über den Widerstand R1 mit dem invertierenden Eingang des Operationsverstärkers verbunden.

Figur 4 zeigt in einer schematischen Darstellung den Signalflußplan des Durchfluß-Stetigventils mit einer Schaltung gemäß dem Stand der Technik. Der Anschluß des Differentialzylinders 13 mit dem Wechselventil 9 und dem integrierten Druckaufnehmer 2 ist identisch mit dem in der Figur 2 beschriebenen. Der Druckbegrenzungsregler 10 ist eingangsseitig über eine Diode mit der Eingangsklemme $P_G$ für den Druckgrenzwert verbunden. Zusätzlich weist der Eingang des Druckbegrenzungsreglers eine Verbindung zu einer Spannungsteilerschaltung auf, bestehend aus zwei Widerständen, wobei der eine Anschluß mit der positiven Versorgungsspannung verbunden ist, der andere mit dem Bezugspotential und der mittige Anschluß mit dem Druckbegrenzungsregler. Der Ausgang des Druckbegrenzungsreglers 10 ist im Vorwärtszweig über eine in Flußrichtung gepolte Diode mit dem Eingang eines zweipoligen Relais 14 verbunden. Der andere Eingang des Relais ist mit der Eingangsklemme $Q_S$ für das Durchfluß-Sollsignal verbunden. Die beiden Ausgänge des Relais 14 sind über eine Subtrahiereinrichtung mit der Eingangsseite des Lagereglers 12 verbunden. Abschließend soll die Funktions- und Wirkungsweise der Korrekturschaltung für das 4-Wege-Durchfluß-Stetigventil erläutert werden.

Bei Beginn eines Regelvorgangs wird bei einem positiven Ausgangssignal $U_A$ der Schaltung 3 der Druckauslaßkanal A des Ventils mit dem Druckeinlaßkanal P verbunden. Dadurch entsteht in der mit dem Anschluß A verbundenen Arbeitskammer der Druck $P_A$ wodurch der Zylinder ausfährt. Der Druck $P_A$ ist größer als der Druck $P_B$ und wirkt daher über das Wechselventil 9 auf den Druckaufnehmer 2. Nimmt durch eine externe Kraft F>O der Druck $P_A$ einen höheren Druck an als der durch das Signal $P_G$ vorgegebene Druckgrenzwert, so gibt der Druckbegrenzungsregler ein positives Korrektursignal $U_K$ an die Korrekturschaltung 3 ab. Bei einem positiven Signal $Q_S$ liefert die Schaltstrecke 4 kein Ausgangssignal, während die Schaltstrecke 5 an ihrem Ausgang ein um den Betrag von $U_K$ vermindertes vorzeichenrichtiges Signal $Q_S$ abgibt. Dieses Ausgangssignal wirkt auf den Lageregelkreis 12 des Steuerkolbens. Infolgedessen verringert sich die Öffnung zwischen dem Druckauslaßkanal A und dem Druckeinlaßkanal P und vermindert den Druck $P_A$ in der Arbeitskammer. Die Besonderheit der Schaltung nach der vorliegenden Erfindung liegt darin, daß selbst wenn ein Korrektursignal $U_K$ vom Druckbegrenzungsregler 10 dem Betrage nach größer ist als das positive Sollwertsignal $Q_S$ ein positives Ausgangssignal $U_A$ höchstens auf den Wert Null verringert werden kann, nicht jedoch einen negativen Wert annimmt.

In analoger Weise wird die Kraft beim Einfahren des Differentialzylinders begrenzt. Der Druck $P_B$ wirkt über das Wechselventil 9 auf den Druckaufnehmer 2. Bei einem negativen Signal $Q_S$ liefert die Schaltstrecke 5 kein Ausgangssignal, während die Schaltstrecke 4 an ihrem Ausgang ein Signal abgibt, dessen Betrag um den Wert von $U_K$ vermindert ist. Durch das Verringern des Betrags des Durchfluß-Sollsignals $Q_S$ wird die Öffnung zwischen dem Druckauslaßsignal B und dem Druckeinlaßsignal P verringert. In Analogie zu dem Vorgang bei dem der Zylinder ausfährt, wird das negative Sollwertsignal $Q_S$ dem Betrage nach höchstens auf den Wert Null verringert. Ein Vorzeichenwechsel ist jedoch ausgeschlossen.

**Patentansprüche**

1.    4-Wege-Durchflußstetigventil (1) mit einem Steuerkolben (7), mit einem integrierten Druckaufnehmer (2) und einem elektrischen Lageregelkreis nach einem elektrischen Schaltkreis (3) zum Erzeugen eines Korrektursignales ($U_K$), das den Betrag des eingestellten Durchflußsollsignales ($Q_S$) dann verringert, wenn der durch den Druckaufnehmer (2) festgestellte Druck einen vorgegebenen Druckgrenzwert ($P_G$) überschreitet,

**dadurch gekennzeichnet,**

daß der elektrische Schaltkreis (3) zwei zueinander parallel geschaltete Schaltstrecken (4, 5) aufweist, die beide eingangsseitig das Korrektursignal ($U_K$) und das Sollsignal ($Q_S$) erhalten, wobei die beiden Schaltstrecken (4, 5) so ausgebildet sind, daß sie kein Ausgangssignal ($U_A$) liefern, wenn das Korrektursignal ($U_K$) größer als der Betrag des Sollsignales ($Q_S$) ist;

daß die erste Schaltstrecke (4) derart ausgebildet ist, daß sie an ihrem Ausgang dann kein Ausgangssignal liefert, wenn das Sollsignal ($Q_S$) positive Polarität aufweist;

daß die zweite Schaltstrecke (5) derart ausgebildet ist, daß sie an ihrem Ausgang dann kein Ausgangssignal liefert, wenn das Sollsignal ($Q_S$) negative Polarität aufweist; und daß die beiden Schaltstrecken (4, 5) ferner derart ausgebildet sind, daß sie ein Ausgangssignal ($U_A$) liefern, das der folgenden Gleichung genügt:

$$U_A = sgn\ [Q_S]\ *\ [Betrag[Q_S] - U_K],$$

$U_A$ = Ausgangssignal, sgn = Signum, $U_K$ = Korrektursignal, $Q_S$ = Durchflußsollsignal.

2. 4-Wege-Durchflußstetigventil nach Anspruch 1,
   **dadurch gekennzeichnet,**
   daß die elektrischen Schaltstrecken (4, 5) zum Erzeugen des Ausgangssignales ($U_A$) wenigstens einen mit negativer Rückkopplung versehenen Operationsverstärker (A1a, A1b, A1c, A1d) beinhalten.

3. 4-Wege-Durchflußstetigventil nach Anspruch 1 oder 2,
   **dadurch gekennzeichnet,**
   daß die beiden Schaltstrecken (4, 5) jeweils wenigstens einen Operationsverstärker (A1a, A1b, A1c, A1d) enthalten, der im Rückkopplungszweig eine Diode (D1, D3) aufweist, die derart gepolt ist, daß die gesamte Schaltstrecke nur für eine Polarität aktiv ist.

4. 4-Wege-Durchflußstetigventil nach wenigstens einem der Ansprüche 1 bis 3,
   **dadurch gekennzeichnet,**
   daß die beiden Schaltstrecken (4, 5) im Vorwärtszweig jeweils eine Diode (D2, D4) enthalten, die derart gepolt ist, daß die gesamte Schaltstrecke nur für eine Polarität ein Ausgangssignal liefert.

5. 4-Wege-Durchflußstetigventil nach wenigstens einem der Ansprüche 1 bis 4,
   **dadurch gekennzeichnet,**
   daß der Steuerkolben einen speziellen Steuerkantenschnitt mit einer Überdeckung zwischen den Anschlüssen (A, B) und dem Betriebsdruckanschluß (P) in einem Bereich von 20-30 %, vorzugsweise 20 % und mit einer Unterdeckung zwischen den Anschlüssen (A, B) und dem Ausgleichsbehälter (T) in einen Bereich von 5-25 %, vorzugsweise 15 % aufweist.

6. 4-Wege-Durchflußstetigventil nach wenigstens einem der Ansprüche 1 bis 5,
   **dadurch gekennzeichnet,**
   daß der elektrische Schaltkreis (3) in das Ventilgehäuse integriert ist.

**Claims**

1. 4-way continuous-action flow valve (1) having a control piston (7) and having an integrated pressure pick-up (2) and an electric position control loop downstream of an electric circuit (3) for generating a correction signal ($U_K$) which reduces the magnitude of the set desired flow signal ($Q_S$) when the pressure determined by the pressure pick-up (2) overshoots a prescribed limiting pressure value ($P_G$), characterized in that the electric circuit (3) has two circuit sections (4, 5) which are connected in parallel with one another and both receive on the input side the correction signal ($U_K$) and the desired signal ($Q_S$), the two circuit sections (4, 5) being designed in such a way that they do not supply any output signal ($U_A$) when the correction signal ($U_K$) is larger than the magnitude of the desired signal ($Q_S$); in that the first circuit section (4) is designed in such a way that it does not supply an output signal at its output when the desired signal ($Q_S$) is of positive polarity; in that the second circuit section (5) is designed in such a way that it does not supply an output signal at its output when the desired signal ($Q_S$) is of negative polarity; and in that the two circuit sections (4, 5) are designed, furthermore, in such a way that they supply an output signal ($U_A$) which satisfies the following equation:

$U_A$ = sgn[$Q_S$]∗[magnitude[$Q_S$]-$U_K$],
$U_A$ = output signal, sgn = signum, $U_K$ = correction signal,
$Q_S$ = desired flow signal.

2. 4-way continuous-action flow valve according to Claim 1, characterized in that the electric circuit sections (4, 5) for generating the output signal ($U_A$) include at least one operational amplifier (A1a, A1b, A1c, A1d) provided with negative feedback.

3. 4-way continuous-action flow valve according to Claim 1 or 2, characterized in that the two circuit sections (4, 5) respectively include at least one operational amplifier (A1a, A1b, A1c, A1d) which has in the feedback path a diode (D1, D3) of polarity such that the entire circuit section is active only for one polarity.

4. 4-way continuous-action flow valve according to at least one of Claims 1 to 3, characterized in that the two circuit sections (4, 5) respectively include in the forward path a diode (D2, D4) of polarity such that the entire circuit section supplies an output signal only for one polarity.

5. 4-way continuous-action flow valve according to at least one of Claims 1 to 4, characterized in that the control piston has a specific control edge section with an overlap in the region of 20-30%, preferably 20%, between the connections (A, B) and the operating-pressure connection (P), and with an underlap in the region of 5-25%, preferably 15%, between the connections (A, B) and the compensating vessel (T).

6. 4-way continuous-action flow valve according to at least one of Claims 1 to 5, characterized in that the electric circuit (3) is integrated into the valve housing.

**Revendications**

1. Soupape à débit continu (1) à quatre voies comportant un piston de commande (7), un capteur de pression intégré (2) et un circuit électrique de régulation de position situé en aval d'un circuit électrique (3) servant à produire un signal de correction ($U_K$), qui réduit la valeur absolue du signal de consigne réglé de débit ($Q_S$) lorsque la pression, fixée par le capteur de pression (2), dépasse une valeur limite de pression prédéterminée ($P_G$),
caractérisée en ce
que le circuit électrique (3) comporte deux sections de commutation (4,5) branchées en parallèle et qui reçoivent toutes les deux, à leurs entrées. le signal de correction ($U_K$) et le signal de consigne ($Q_S$), les deux sections de commutation (4,5) étant agencées de telle sorte qu'elles ne délivrent aucun signal de sortie ($U_A$) lorsque le signal de correction ($U_K$) est supérieur à la valeur absolue du signal de consigne ($Q_S$);
que la première section de commutation (4) est agencée de telle sorte qu'elle ne délivre à sa sortie aucun signal de sortie lorsque le signal de consigne ($Q_S$) possède une polarité positive;
que la seconde section de commutation (5) est agencée de telle sorte qu'elle ne délivre à sa sortie aucun signal de sortie lorsque le signal de consigne ($Q_S$) possède une polarité négative; et
que les deux sections de commutation (4,5) sont en outre agencées de telle sorte qu'elles délivrent un signal de sortie ($U_A$) qui satisfait à la relation suivante :
$U_A$ = sgn[$Q_S$]∗[valeur absolue de [$Q_S$]-$U_K$],
avec $U_A$ = signal de sortie, sgn = signe, $U_K$ = signal de correction, $Q_S$ = signal de consigne de débit.

2. Soupape à débit continu à quatre voies selon la revendication 1, caractérisée en ce
que les sections électriques de commutation (4,5) contiennent, pour la production du signal de sortie ($U_A$), au moins un amplificateur opérationnel (A1a, A1b, A1c, A1d) comportant une boucle de contre-réaction.

3. Soupape à débit continu à quatre voies selon la revendication 1 ou 2, caractérisée en ce
que les deux sections de commutation (4,5) contiennent respectivement au moins un amplificateur opérationnel (A1a, A1b, A1c, A1d), qui possède, dans la branche de réaction, une diode (D1,D3), qui est polarisée de telle sorte que l'ensemble de la section de commutation est active uniquement pour une polarité.

4. Soupape à débit continu à quatre voies selon au moins l'une des revendications 1 à 3, caractérisée en ce
que les deux sections de commutation (4,5) contiennent, dans la branche directe, respectivement une diode (D2,D4), qui est polarisée de telle sorte que l'ensemble de la section de commutation délivre un signal de sortie uniquement pour une polarité.

5. Soupape à débit continu à quatre voies selon au moins l'une des revendications 1 à 4, caractérisée en ce que
le piston de commande possède une coupe particulière du bord de commande avec un recouvrement entre les raccords (A,B) et le raccord de pression de service (P) dans une gamme de 20-30 %, de préférence 20 %, et défaut de recouvrement entre les raccords (A,B) et le récipient de compensation (T) dans une gamme de 5-25 %, de préférence 15 %.

6. Soupape à débit continu à quatre voies selon au moins l'une des revendications 1 à 5, caractérisée en ce que
le circuit électrique (3) est intégré dans le boîtier de vanne.

EP 0 500 986 B1

X  T  A  P  B  T2  Y

Fig 1

Fig 2

EP 0 500 986 B1

Fig 3

Fig 4